# EUROPEAN PATENT APPLICATION

(11) **EP 4 481 144 A1**
(43) Date of publication of application: **25.12.2024**
(21) Application number: 23382647.8
(22) Date of filing: 23.06.2023
(51) Int. Cl.: E04H 12/12, E04H 12/16, F03D 13/20

(54) **CONCRETE SEGMENT OF A SECTION OF A WIND TURBINE TOWER, SET OF A CONCRETE SEGMENT AND HEATING MEANS, CONCRETE SECTION, WIND TURBINE, MOULD AND METHOD OF ASSEMBLING THE WIND TURBINE**

(71) Applicant: Nordex Energy Spain, S.A.U., 31395 Barasoain (Navarra) (ES)
(72) Inventor: Varea, Sergio, Barasoain (ES); Camarero, David, Barasoain (ES); Gutiérrez, Francisco, Barasoain (ES); Cerrillo, Vanessa, Barasoain (ES)
(74) Representative: Pons

(57) **Abstract**

The present invention can be included in the technical field of concrete segments (10,10') for wind turbine towers (100) and more specifically for wind turbine towers in cold climates, where ambient temperature is below 5°C. at the same time, the invention relates to a set of a concrete segment and heating means (8), a concrete section (50), a wind turbine, a mould and a method of assembling the wind turbine.

## Description

### OBJECT OF THE INVENTION

The present invention can be included in the technical field of concrete segments for wind turbine towers and more specifically for wind turbine towers in cold climates, where ambient temperature is below 5°C. at the same time, the invention relates to a set of a concrete segment and heating means, a concrete section, a wind turbine, a mould and a method of assembling the wind turbine.

### BACKGROUND OF THE INVENTION

The objective of wind energy is to generate electricity from the wind using wind turbines at maximum possible efficiency and minimum cost. Said wind turbines basically consist of a tower, a nacelle which contains the electrical generator and a rotor comprising at least two blades.

The tower supports all the elements incorporated in the nacelle and transmits to the foundations all the reaction forces generated as a consequence of the wind turbine's different aerodynamic actions and operating conditions.

Generally, given the dimensions of the wind turbine and consequently, of the tower, the latter is manufactured using modular sections of reinforced concrete called precast segments. To join these precast segments it is necessary to use a filler material, which may consist of mortar (also called *grout*) or a resin, deposited in them.

From now onwards the invention will be explained making reference to the use of mortar as filler, although it could be, as mentioned, resin or another material.

During the assembly of concrete towers at low temperatures it is necessary to guarantee minimum temperature conditions (at least 5° C) for both the precast segments and the mortar before pouring the mortar, including the temperature of the mortar poured into the vertical and horizontal joints, to guarantee adequate curing so that the mortar can develop all its mechanical properties (resistance).

When these assemblies are made at low temperatures, where the temperature can drop to -20° C, in order to ensure a correct structural behaviour of the towers, it is necessary to have a heating system that allows the temperature to be maintained above 5° C in both the precast segments and the mortar poured into the joints.

Pouring mortar at ambient temperatures below 0° C is always a fairly restrictive conditioning factor. This is due to the fact that concrete requires a certain temperature for the cement to hydrate and acquire resistance. Also, because it contains water, there is a risk that when it starts to set, free-running water freezes increasing its volume, with the ensuing danger of cracking.

In the case of assembling concrete towers at low temperature, the volume of mortar is insufficient to guarantee that the water will not freeze, as it is totally surrounded by a large mass of prefabricated concrete which is at ambient temperature.

In low temperature conditions (below 5° C) in addition to ensuring the mechanical properties of the mortar, it is necessary to guarantee the perfect filling of the joints between the precast segments that make up the tower.

To this effect, it must be feasible to pump said mortar to a height of 20m with no segregation occurring upon pouring it from a height of 20 metres in free fall, in the case of vertical joints. Horizontal joints are even more restrictive as in this case, the pouring of the mortar must be guaranteed at heights above 100m. It is required for all mortars, according to their technical datasheet, that the temperature of the support (in the case of towers for wind turbines these are the precast segments) is at a temperature of at least +5° C to guarantee correct curing. Below 5°C manufacturers do not guarantee the necessary minimum resistances.

Traditionally, in the closest prior art, foundations are made at -20° C using concrete with high cement content so that it has a high heat of hydration and heats up quick enough to avoid freezing. Generally, footings are covered with thermal blankets so as not to lose too much heat and in this way maintain the temperature at the required values.

The problem with using thermal blankets is that they need to adhere well to the surfaces that require heating. If said blankets are not well-adhered, the heating of the surfaces is slow and non-homogeneous.

Another possibility for heating consists of using fans with an electrical resistance (cylindrical conduits with directional air outlet nozzles) directed towards the joints. Some of the problems that arise with this solution are that a high number of fans is necessary, making it necessary to have a high number of generators to supply energy to the fans, and that a certain assurance of continuous system operation is necessary as a stoppage would entail the rapid loss of the thermal conditions previously generated.

Other alternatives considered in the pre-heating are the use of infrared lamps. The market solutions do not achieve effective results where heating is concerned.

The current technique for pouring mortar presents four clear drawbacks, among which one would highlight the problems with cracking due to freezing of the water present, quality problems in the formation of the joints, filling problems (especially in horizontal joints at heights that are distant from the ground), and problems with the resistance capacity of the mortar when the temperature reached is below 5° C, problems with assembly in relation to both times and means employed (difficulty with pumping, heating of the nearby medium where the mortar is deposited ... etc.), and the need to use special mortars with a high content in cement with the ensuing increase in the expensiveness of the tower.

The heating system known in the state of the art designed to the thermal conditioning of the materials to resolve the problems described above present a high consumption due to low thermal efficiency.

### DESCRIPTION OF THE INVENTION

The present invention discloses a concrete segment of a wind turbine tower, wherein the concrete segment comprises an inner surface, an outer surface and at least one connection flange configured to establish a boundary for the creation of at least one joint between said concrete segment and an adjacent concrete segment, the at least one connection flange comprising a connecting surface, wherein the concrete segment comprises at least one recess provided within the connecting surface of the at least one connection flange configured to at least partially allocate or locate, in use, heating means.

Thus, the heating means ensures the curing of the joint in sub-zero ambient conditions.

Optionally, the concrete segment comprises at least two connection flanges, being in particular at least an upper flange and a lower flange, wherein each one of the at least two connection flanges comprises one connecting surface.

Optionally, the at least one recess is placed at least partially essentially parallel to the inner surface and/or the outer surface.

Optionally, the at least one connection flange comprises at least two recesses being at least an outer recess and an inner recess, wherein a first radial distance from the inner recess, to the inner surface is smaller than a second radial distance from the outer recess, to the outer surface.

Optionally, the at least one connection flange comprises a single recess comprising an inner branch and an outer branch, wherein a first radial distance from the inner branch, to the inner surface is smaller than a second radial distance from the outer branch, to the outer surface.

Optionally, the at least one recess comprises at least one end configured to connect the at least one recess with at least one connecting surface of the concrete segment.

Optionally, the at least one end is configured to connect the at least one recess with the inner surface and/or the outer surface.

Preferably, the at least one end is oblique or perpendicular to the inner surface and/or the outer surface.

Optionally, the at least one end is configured to connect the at least one recess with the connecting surface of one lateral flange.

Optionally, the concrete segment comprises at least one recess disposed in the upper flange and at least one recess disposed in the lower flange.

Optionally, the at least one recess comprises a first depth, wherein, in use, the first depth is greater than a height of the heating means at least partially allocated in the at least one recess, thus preferably being the heating means once allocated, completely embedded in the at least one recess.

Optionally, the connecting surface comprises a length, wherein the at least one recess is evenly distributed along essentially the entire length of the connecting surface, preferably along the whole length.

Optionally, the connecting surface comprises a width, wherein the at least one recess is unevenly distributed along the width of the connecting surface.

Optionally, the at least one recess is a continuous recess, preferably forming a loop.

Optionally, the at least one recess is provided in a reinforced-free concrete zone of the concrete segment.

Optionally, the heating means comprises at least a heating cable.

Optionally, the at least one recess is configured to at least partially allocate a single heating cable disposed in parallel or a plurality of heating cables disposed in parallel.

Optionally, the at least one recess provided within the connecting surface is at least one recess provided in a connecting surface of an upper flange, of a lower flange or of a lateral flange of the concrete segment, i.e., in a horizontal joint for the two first connecting surfaces and in a vertical joint for the last connecting surface.

The concrete segment so configured presents the following advantages:
- the heating means are closer to the grout of the joint than if they were embedded in the precast concrete
- Ease of laying prior to the assembly of the sections.
- Avoid damage to the cables by placing them in recesses, minimising the risk of them being pinched during assembly.

The invention also relates to a set of a concrete segment as described above and heating means at least partially allocated in the at least one recess provided within the connecting surface of the at least one connection flange, as described above.

Optionally, set also comprises retaining means configured to hold the heating means within the at least one recess.

Optionally, the retaining means comprise at least one layer of a cured filler material disposed at least partially over the heating means once located within the at least one recess.

Optionally, the at least one layer of a cured filler material comprises a thickness lower than 20mm, preferably lower than 10mm.

Optionally, the filler material is selected from between a resin and a fast-curing grout.

The invention also relates to a section of a wind turbine tower comprising at least two concrete segments as described above.

Optionally, the section comprises an upper flange formed by the upper flanges of the at least two concrete segments and a lower flange formed by the lower flanges of the at least two concrete segments.

Optionally, each one of the at least two concrete segments is a concrete segment comprising a lower flange wherein the at least one recess is disposed and wherein the at least one end of the at least one recess is configured to connect the at least one recess with the inner surface and/or the outer surface, preferably, one recess comprising one end configured to connect the recess with the inner surface and/or the outer surface, thus defining the lower flange of the concrete section. The heating means are disposed in the recess in such a way that only one end of the heating means corresponding to the one end of the recess of each concrete segment are connected to the inner or outer surface, thus establishing an electrical connection for each one of the concrete segments of the lower flange of the concrete section.

Optionally, at least one of the at least two concrete segments is a concrete segment comprising an upper flange wherein the at least one recess is disposed and wherein the two ends of the at least one recess is configured to connect the at least one recess with the inner surface and/or the outer surface, preferably, one recess comprising two ends configured to connect the recess with the inner surface and/or the outer surface and so connect the recess with a recess of an adjacent lateral segment, and the at least other concrete segment of the at least two concrete segments is a concrete segment comprising an upper flange wherein the at least one recess is disposed and wherein the at least one end of the at least one recess is configured to connect the at least one recess with the connecting surface of one lateral, preferably, two recesses comprising each one of them two ends configured to connect each recess with an adjacent lateral segment, thus defining the upper flange of the concrete section. The heating means are disposed in the recesses in such a way that only two ends of the heating means corresponding to the two ends of the recess of one concrete segment are connected to the inner or outer surface, thus establishing a single electrical connection for the whole upper flange of the concrete section.

Thus, in the upper flange, the heating means are assembled once the concrete section has been formed, preferably in in the wind farm in a preassembly stage of the concrete section, so that there is a single circuit, while for the lower flange of the section, there are as many circuits as the number of concrete segments of the concrete section since the heating means are placed in each concrete segment in the factory, after concreting the concrete segment.

The invention also relates to a wind turbine comprising at least two sections as described above, a joint disposed between the at least two sections and heating means at least partially allocated in the at least one recess provided within the connecting surface of the at least one connection flange of the at least two concrete segments.

The invention also relates to a mould configured to cast a concrete segment as described above, wherein the mould comprises at least a base, a counter-mould and two lateral sides, wherein at least one of the two lateral sides comprises an inner surface, wherein the inner surface comprises at least one protrusion configured to cast the at least one recess.

The invention also relates to a method of assembling the wind turbine describe above, the method comprising the following steps:
- a step of lifting at least one concrete segment; and
- a step of disposing heating means within the at least one recess of the at least one concrete segment.

Optionally, the step of disposing the heating means within the at least one recess of the at least one concrete segment is carried out before the step of lifting at least one concrete segment.

Optionally, the step of disposing the heating means within the at least one recess of the at least one concrete segment is carried out after the step of lifting at least one concrete segment.

Optionally, the method further comprises a step of disposing retaining means inside the at least one recess, holding the heating means within the at least one recess in such a way that the heating means are completely embedded in the at least one recess.

Optionally, the method comprises a step of removing the heating means from the recess and a subsequent step of inserting said heating means into the recess of another concrete segment.

Optionally, in the step of disposing retaining means inside the at least one recess, holding the heating means within the at least one recess in such a way that the heating means are completely embedded in the at least one recess, an upper part of the heating means are levelled with the connecting surface.

The proposed concrete segment, set, section, mould, wind turbine and method help to resolve the problem of curing the filler material in the vertical and horizontal joints of constructive structures in cold climates wherein the ambient temperature is below 5°C. More specifically, both the design of the concrete segment and method described allow the use of an optimal heating system of the precast concrete segments in the zone close to the joints between precast segments. Likewise, they allow adequate setting of the filler material deposited between the vertical and horizontal joints of the precast segments used in the wind turbine tower. One additional advantage of the proposed precast segment and method is that after being used in a precast segment, the heating system can be reused for the thermal conditioning of another precast segment.

### DESCRIPTION OF THE DRAWINGS

To complement the description and with a view to contributing to a better understanding of the characteristics of the invention in accordance with a preferred example of a practical embodiment thereof, a set of drawings is attached as an integral part of said description wherein, by way of illustration and not limitation, the following has been represented:

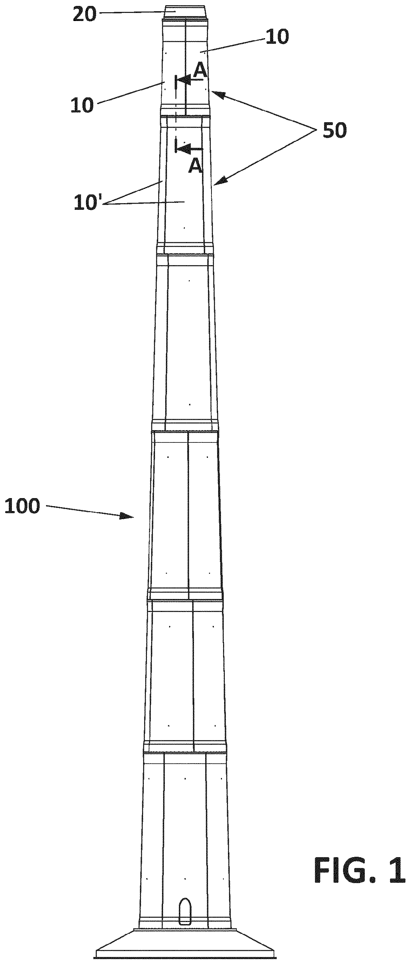

Figure 1 shows a front view of a tower of a wind turbine comprising concrete segments according to the invention.

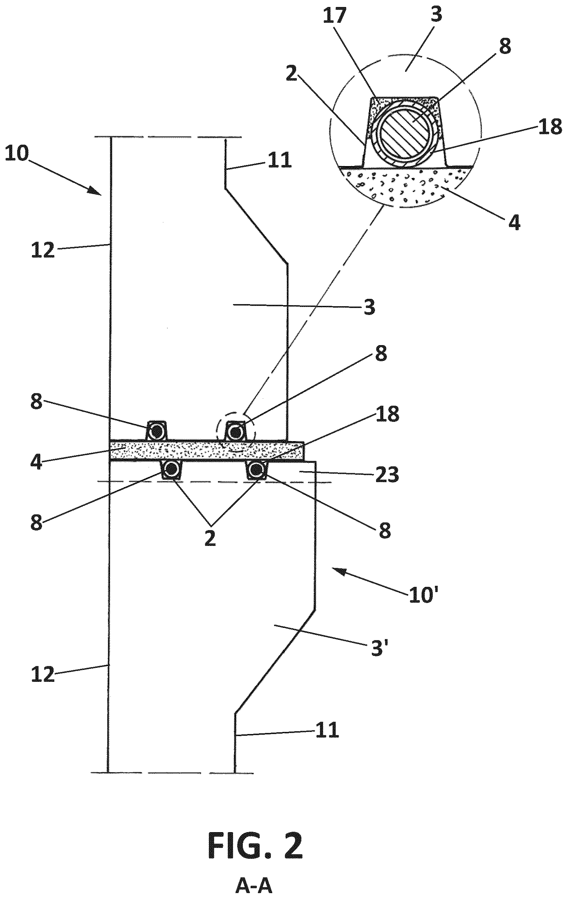

Figure 2 shows a section AA of Figure 1 and a detail of the recess wherein the heating means are located.

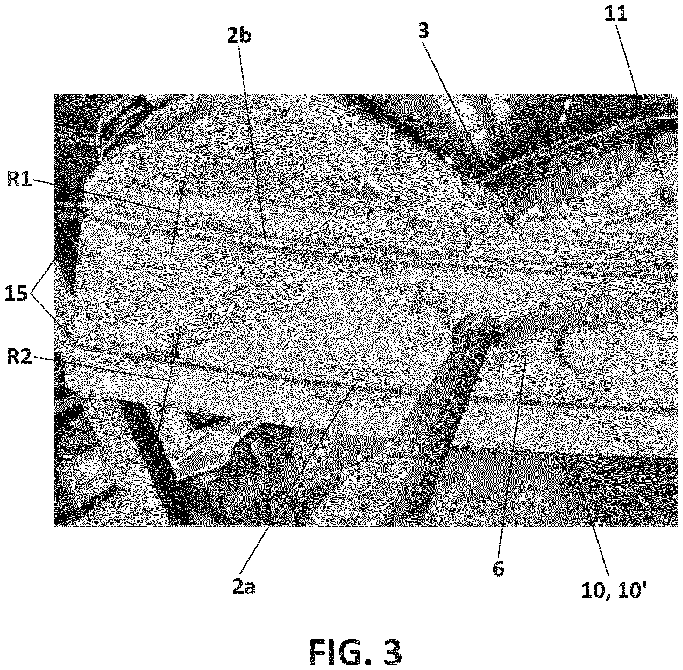

Figure 3 shows an inferior partial view of a concrete segment according to a first embodiment.

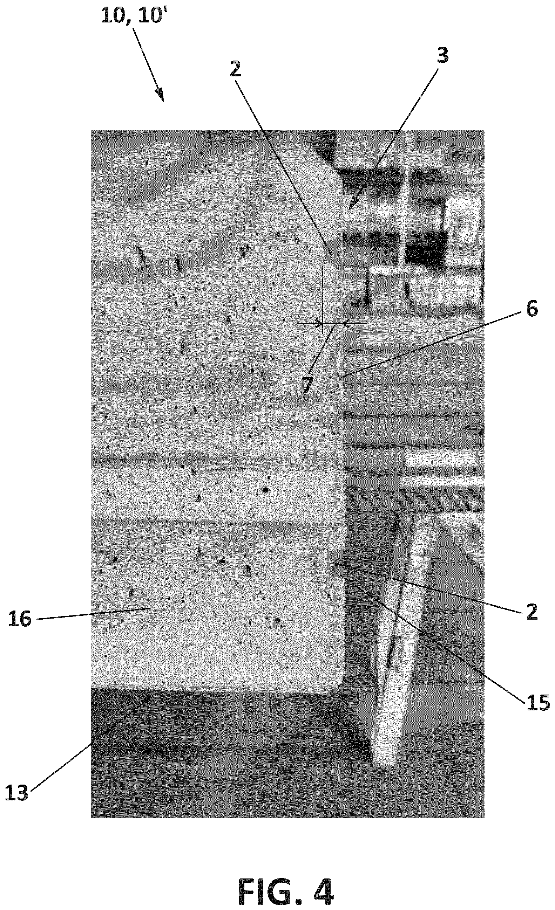

Figure 4 shows a lateral partial view of Figure 3.

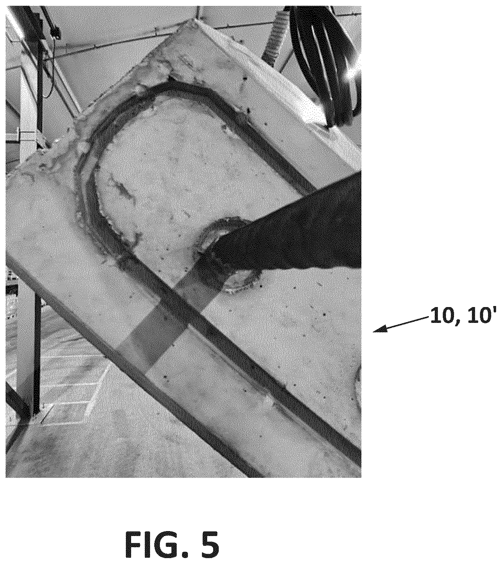

Figure 5 shows an inferior partial view of a concrete segment according to a second embodiment.

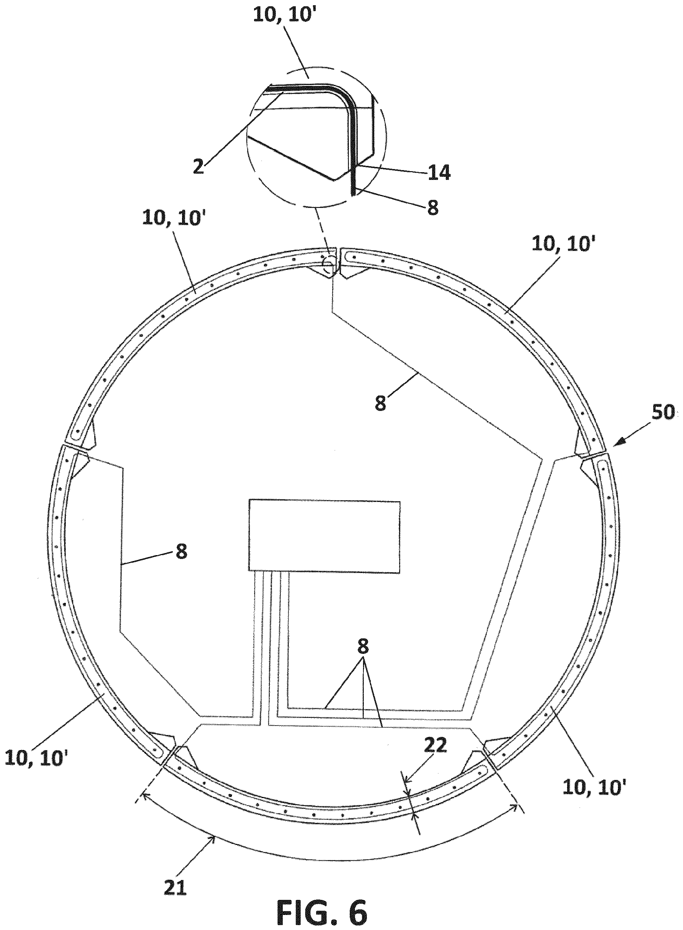

Figure 6 shows the lower flange of a concrete section according to the invention.

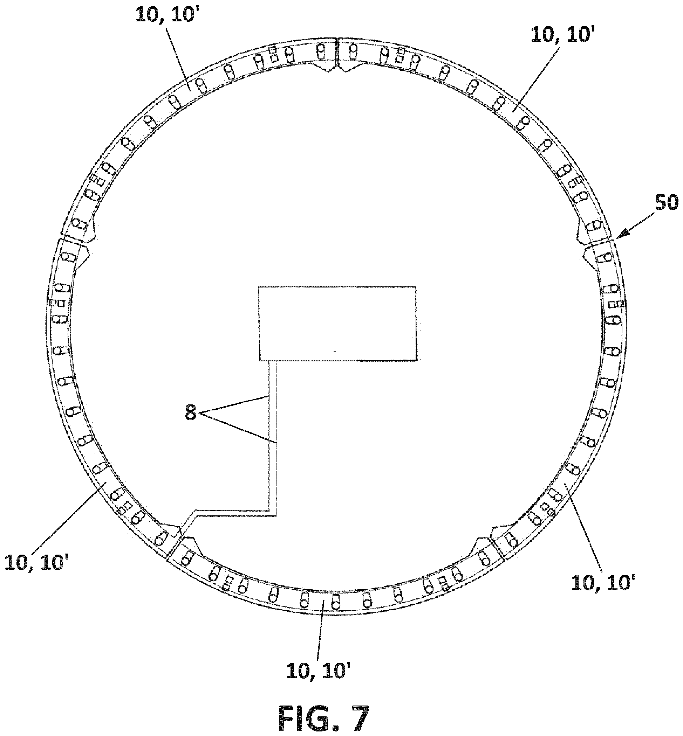

Figure 7 shows the upper flange of a concrete section according to the invention.

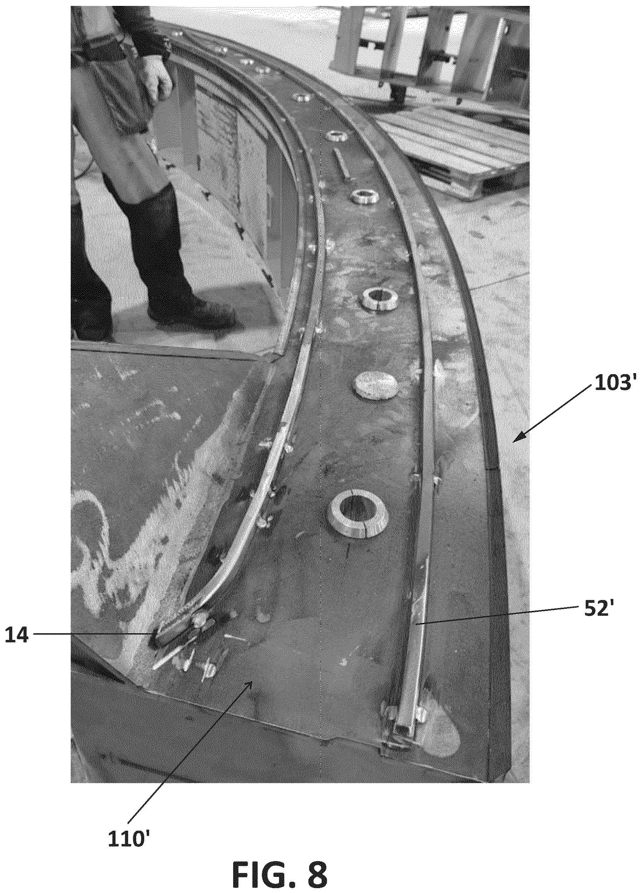

Figure 8 shows a partial view of a lateral side of the mould configured to cast the concrete segment.

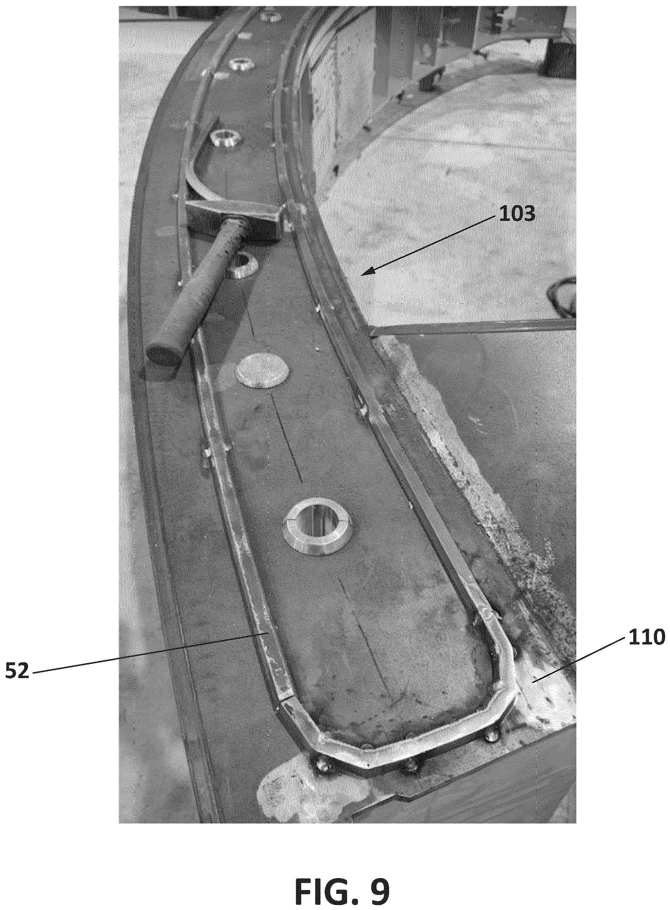

Figure 9 shows another partial view of a lateral side of the mould configured to cast the concrete segment.

### PREFERRED EMBODIMENT OF THE INVENTION

The present invention describes a concrete segment (10, 10') of a wind turbine tower (100), wherein the concrete segment comprises an inner surface (11), an outer surface (12) and at least one connection flange (3, 3', 13, 13') configured to establish a boundary for the creation of at least one joint (4) between said concrete segment (10) and an adjacent concrete segment (10, 10'), the at least one connection flange (3, 3', 13, 13') comprising a connecting surface (6, 6', 16, 16'), characterised in that the concrete segment (10, 10') comprises at least one recess (2, 2') provided within the connecting surface (6, 6', 16, 16') of the at least one connection flange (3, 3', 13, 13') configured to at least partially allocate, in use, heating means (8).

The concrete segment (10, 10') comprises at least two connection flanges (3, 3', 13, 13'), being in particular at least an upper flange (3') and a lower flange (3), wherein each one of the at least two connection flanges (3, 3', 13, 13') comprises one connecting surface (6, 6', 16, 16').

Preferably, the at least one recess (2, 2') is placed at least partially essentially parallel to the inner surface (11) and the outer surface (12).

In one embodiment for the upper flange of concrete segment, the at least one connection flange (3, 3') comprises at least two recesses (2, 2') being at least an outer recess (2a, 2a') and an inner recess (2b, 2b'), wherein a first radial distance (R1) from the inner recess (2b, 2b'), to the inner surface (11) is smaller than a second radial distance (R2) from the outer recess (2a, 2a'), to the outer surface (12).

In another embodiment for the upper or lower flange of another concrete segment there is a single recess (2, 2') comprising an inner branch and an outer branch, wherein a first radial distance (R1) from the inner branch, to the inner surface (11) is smaller than a second radial distance (R2) from the outer branch, to the outer surface (12).

Preferably, the at least one recess (2, 2') comprises at least one end (14, 15) configured to connect the at least one recess (2, 2') with at least one connecting surface (6, 6', 16, 16') of the concrete segment (10, 10').

For one embodiment, the at least one end (14) is configured to connect the at least one recess (2, 2') with the inner surface (11) and/or the outer surface (12), wherein the at least one end (14) is oblique or perpendicular to the inner surface (11) and/or the outer surface (12), preferably to the inner surface (11).

For another embodiment, the at least one end (15) is configured to connect the at least one recess (2, 2') with the connecting surface (16, 16') of at least one lateral flange (13, 13').

Preferably, the concrete segment (10, 10') comprises at least one recess (2') disposed in the upper flange (3') and at least one recess (2) disposed in the lower flange (3).

Preferably, the at least one recess (2, 2') comprises a first depth (7, 7'), wherein, in use, the first depth (7, 7') is greater than a height of the heating means (8) at least partially allocated in the at least one recess (2, 2').

Preferably, the connecting surface (6, 6', 16, 16') comprises a length (21), wherein the at least one recess (2, 2') is evenly distributed along essentially the entire length (21) of the connecting surface (6, 6', 16, 16').

Preferably, the connecting surface (6, 6', 16, 16') comprises a width (22), wherein the at least one recess (2, 2') is unevenly distributed along the width (22) of the connecting surface (6, 6', 16, 16').

Preferably, the at least one recess (2, 2') is a continuous recess (2, 2'), preferably forming a loop.

Preferably, the at least one recess (2, 2') is provided in a reinforced-free concrete zone (23) of the concrete segment (10, 10').

The set comprises a concrete segment (10, 10') of any of the previous claims and heating means (8) at least partially allocated in the at least one recess (2, 2') provided within the connecting surface (6, 6', 16, 16') of the at least one connection flange (3, 3', 13, 13').

Optionally, the set further comprises retaining means (17) configured to hold the heating means (8) within the at least one recess (2, 2'). Preferably, the retaining means (17) comprise at least one layer of a cured filler material disposed at least partially over the heating means (8) once located within the at least one recess (2, 2'). Preferably, the at least one layer of a cured filler material comprises a thickness lower than 20mm, preferably lower than 10mm. Preferably, the filler material is selected from between a resin and a fast-curing grout.

The concrete section (50) comprises at least two concrete segments (10, 10') as described above.

Preferably, the section (50) comprises an upper flange formed by the upper flanges (3') of the at least two concrete segments (10, 10') as described above and and a lower flange formed by the lower flanges (3) of the at least two concrete segments (10, 10') as described above.

For the lower flange, each one of the at least two concrete segments (10, 10') is the concrete segment (10, 10') wherein the at least one end (14) is configured to connect the at least one recess (2, 2') with the inner surface (11) and/or the outer surface (12) and is disposed in the lower flange (3).

For the upper flange, at least one of the at least two concrete segments (10, 10') is the concrete segment (10, 10') wherein two ends (14), wherein the two ends (14) of the at least one recess (2') is disposed in the upper flange (3) and the at least other concrete segment (10, 10') of the at least two concrete segments (10, 10') is the concrete segment (10, 10') wherein the at least one end (15) of the at least one recess (2') is disposed in the upper flange (3').

The wind turbine comprises at least two sections as described above, a joint (4) disposed between the at least two sections and heating means (8) at least partially allocated in the at least one recess (2, 2') provided within the connecting surface (6, 6', 16, 16') of the at least one connection flange (3, 3', 13, 13') of the at least two concrete segments (10, 10').

The mould configured to cast a concrete segment as described above, comprises at least a base, a counter-mould and two lateral sides (103, 103'), wherein at least one of the two lateral sides (103, 103') comprises an inner surface (110, 110'), wherein the inner surface (110) comprises at least one protrusion (52, 52') configured to cast the at least one recess (2, 2').

## Claims

1. Concrete segment (10, 10') of a wind turbine tower (100), wherein the concrete segment comprises an inner surface (11), an outer surface (12) and at least one connection flange (3, 3', 13, 13') configured to establish a boundary for the creation of at least one joint (4) between said concrete segment (10) and an adjacent concrete segment (10, 10'), the at least one connection flange (3, 3', 13, 13') comprising a connecting surface (6, 6', 16, 16'), **characterised in that** the concrete segment (10, 10') comprises at least one recess (2, 2') provided within the connecting surface (6, 6', 16, 16') of the at least one connection flange (3, 3', 13, 13') configured to at least partially allocate, in use, heating means (8).

2. The concrete segment (10, 10') of claim 1 comprising at least two connection flanges (3, 3', 13, 13'), being in particular at least an upper flange (3') and a lower flange (3), wherein each one of the at least two connection flanges (3, 3', 13, 13') comprises one connecting surface (6, 6', 16, 16').

3. The concrete segment (10, 10') of any of preceding claims, wherein the at least one recess (2, 2') is placed at least partially essentially parallel to the inner surface (11) and/or the outer surface (12).

4. The concrete segment (10, 10') of claims 2 and 3, wherein the at least one connection flange (3, 3') comprises at least two recesses (2, 2') being at least an outer recess (2a, 2a') and an inner recess (2b, 2b'), wherein a first radial distance (R1) from the inner recess (2b, 2b'), to the inner surface (11) is smaller than a second radial distance (R2) from the outer recess (2a, 2a'), to the outer surface (12) or a single recess (2, 2') comprising an inner branch and an outer branch, wherein a first radial distance (R1) from the inner branch, to the inner surface (11) is smaller than a second radial distance (R2) from the outer branch, to the outer surface (12).

5. The concrete segment (10, 10') of any of claims 1 to 4, wherein the at least one recess (2, 2') comprises at least one end (14, 15) configured to connect the at least one recess (2, 2') with at least one connecting surface (6, 6', 16, 16') of the concrete segment (10, 10').

6. The concrete segment (10, 10') of claim 5, wherein the at least one end (14) is configured to connect the at least one recess (2, 2') with the inner surface (11) and/or the outer surface (12).

7. The concrete segment (10, 10') of claim 6, wherein the at least one end (14) is oblique or perpendicular to the inner surface (11) and/or the outer surface (12).

8. The concrete segment (10, 10') of claim 5, wherein the at least one end (15) is configured to connect the at least one recess (2, 2') with the connecting surface (16, 16') of at least one lateral flange (13, 13').

9. The concrete segment (10, 10') of any of claims 2 to 8, comprising at least one recess (2') disposed in the upper flange (3') and at least one recess (2) disposed in the lower flange (3).

10. The concrete segment (10, 10') of any of previous claims, wherein the at least one recess (2, 2') comprises a first depth (7, 7'), wherein, in use, the first depth (7, 7') is greater than a height of the heating means (8) at least partially allocated in the at least one recess (2, 2').

11. The concrete segment (10, 10') of any of previous claims, wherein the connecting surface (6, 6', 16, 16') comprises a length (21), wherein the at least one recess (2, 2') is evenly distributed along essentially the entire length (21) of the connecting surface (6, 6', 16, 16').

12. The concrete segment (10, 10') of any of previous claims, wherein the connecting surface (6, 6', 16, 16') comprises a width (22), wherein the at least one recess (2, 2') is unevenly distributed along the width (22) of the connecting surface (6, 6', 16, 16').

13. The concrete segment (10, 10') of any of previous claims, wherein the at least one recess (2, 2') is a continuous recess (2, 2'), preferably forming a loop.

14. The concrete segment (10, 10') of any of previous claims, wherein the at least one recess (2, 2') is provided in a reinforced-free concrete zone (23) of the concrete segment (10, 10').

15. Set of a concrete segment (10, 10') of any of the previous claims and heating means (8) at least partially allocated in the at least one recess (2, 2') provided within the connecting surface (6, 6', 16, 16') of the at least one connection flange (3, 3', 13, 13').

16. The set of claim 15, further comprising retaining means (17) configured to hold the heating means (8) within the at least one recess (2, 2').

17. The set of claim 16, wherein the retaining means (17) comprise at least one layer of a cured filler material disposed at least partially over the heating means (8) once located within the at least one recess (2, 2').

18. The set of claim 17, wherein the at least one layer of a cured filler material comprises a thickness lower than 20mm, preferably lower than 10mm.

19. The set of any of claims 17 or 18, wherein the filler material is selected from between a resin and a fast-curing grout.

20. Section (50) of a wind turbine tower (100) comprising at least two concrete segments (10, 10') according to any of claims 1 to 14.

21. The section (50) of claim 20 comprising an upper flange formed by the upper flanges (3') of the at least two concrete segments (10, 10') of claim 2 and a lower flange formed by the lower flanges (3) of the at least two concrete segments (10, 10') of claim 2.

22. The section (50) of claim 21, wherein each one of the at least two concrete segments (10, 10') is the concrete segment (10, 10') of claim 6, wherein the at least one end (14) of the at least one recess (2) is disposed in the lower flange (3).

23. The section (50) of claim 21, wherein at least one of the at least two concrete segments (10, 10') is the concrete segment (10, 10') of claim 6 comprising two ends (14), wherein the two ends (14) of the at least one recess (2') is disposed in the upper flange (3) and the at least other concrete segment (10, 10') of the at least two concrete segments (10, 10') is the concrete segment (10, 10') of claim 8, wherein the at least one end (15) of the at least one recess (2') is disposed in the upper flange (3').

24. Wind turbine comprising a tower which in turn comprises at least two sections of any of claims 20 to 23, a joint (4) disposed between the at least two sections and heating means (8) at least partially allocated in the at least one recess (2, 2') provided within the connecting surface (6, 6', 16, 16') of the at least one connection flange (3, 3', 13, 13') of the at least two concrete segments (10, 10').

25. Mould configured to cast a concrete segment of any of the claims 1 to 14, wherein the mould (100) comprises at least a base (101), a counter-mould (102) and two lateral sides (103, 103'),
wherein at least one of the two lateral sides (103, 103') comprises an inner surface (110, 110'), wherein the inner surface (110) comprises at least one protrusion (52, 52') configured to cast the at least one recess (2, 2').

26. Method of assembling the wind turbine of claim 24 comprising the following steps:
- a step of lifting at least one concrete segment (10, 10); and
- a step of disposing heating means within the at least one recess (2, 2") of the at least one concrete segment (10, 10').

27. The method of claim 26, wherein the step of disposing the heating means within the at least one recess (2, 2") of the at least one concrete segment (10, 10') is carried out before the step of lifting at least one concrete segment (10, 10).

28. The method of claim 26, wherein the step of disposing the heating means within the at least one recess (2, 2") of the at least one concrete segment (10, 10') is carried out after the step of lifting at least one concrete segment (10, 10).

29. The method of any of claims 26 to 28 further comprising a step of disposing retaining means (17) inside the at least one recess (2, 2'), holding the heating means (8) within the at least one recess (2, 2') in such a way that the heating means (8) are completely embedded in the at least one recess (2, 2').
